# EUROPEAN PATENT APPLICATION

(11) **EP 4 470 738 A1**
(43) Date of publication of application: **04.12.2024**
(21) Application number: 23747112.3
(22) Date of filing: 27.01.2023
(51) Int. Cl.: B27K 3/15, B27K 3/38, B27K 3/50, B27K 3/52

(54) **METHOD FOR PRODUCING MODIFIED WOODEN MATERIAL, 5-HMF RESINIFICATION SOLUTION, AND MODIFIED WOODEN MATERIAL**

(30) Priority: 28.01.2022 JP 2022012117
(71) Applicant: Furanwood Co., Ltd., Tsuyama-shi, Okayama, 708-0007 (JP); KYOTO PREFECTURAL PUBLIC UNIVERSITY CORPORATION, Kyoto-shi, Kyoto 602-8566 (JP)
(72) Inventor: ITOH, Takafumi, Kyoto-shi, Kyoto 606-8522 (JP); MIYAFUJI, Hisashi, Kyoto-shi, Kyoto 606-8522 (JP); FURUTA, Yuzo, Kyoto-shi, Kyoto 606-8522 (JP); KOJIRO, Keisuke, Kyoto-shi, Kyoto 606-8522 (JP); HORIYAMA, Hiroaki, Kyoto-shi, Kyoto 606-8522 (JP); OTSUKA, Yukari, Kyoto-shi, Kyoto 606-8522 (JP); OHARA, Fujio, Tsuyama-shi, Okayama 708-0884 (JP); ITO, Hiroki, Tsuyama-shi, Okayama 708-0884 (JP); YAMAZAKI, Yoshiko, Tsuyama-shi, Okayama 708-0884 (JP)
(74) Representative: Murgitroyd & Company
(86) International application number: PCT/JP2023/002715
(87) International publication number: WO 2023/145902

(57) **Abstract**

The present invention discloses a method for producing a modified wooden material. Specifically disclosed is a method for producing a modified wooden material, said method comprising: 1) a step for causing permeation, into a wooden material, of a 5-hydroxymethylfurfural (5-HMF) resinification solution containing 5-HMF and an inorganic salt for promoting polymerization of the 5-HMF; and 2) a step for polymerizing the 5-HMF of the permeated 5-HMF resinification solution in the wooden material by means of heating.

## Description

### TECHNICAL FIELD

The present invention relates to a method of modifying a wooden material, namely a method of producing a wooden material that is modified (modified wooden material). The present invention also relates to a solution for this production method, as well as a wooden material modified by a treatment using the solution.

### BACKGROUND ART

Examples of wooden materials include hardwood materials and coniferous materials. For instance, tropical hardwood materials of some species are generally hard and strong against decay; therefore, they are used for interior materials such as furniture and flooring, exterior materials such as wood decks, and the like.

### PRIOR ART DOCUMENT

### PATENT DOCUMENT

[Patent Document 1] Japanese Unexamined Patent Application Publication (Translation of PCT Application) No. 2005-533688

### SUMMARY OF THE INVENTION

### PROBLEMS TO BE SOLVED BY THE INVENTION

In order to make a wooden material more suitable for use, it is considered modifying the wooden material.

An object of the present invention is to modify a wooden material.

### SOLUTIONS TO THE PROBLEMS

The present inventors intensively studied the above-described problem and consequently discovered that a wooden material can be imparted with desired properties by using, as a solution for modifying the wooden material, a furan derivative resinification solution such as a 5-HMF resinification solution which contains a furan derivative typified by 5-HMF in combination with a specific agent accelerating the polymerization of at least a portion of the furan derivative and/or the adhesion of the same to the wooden material, for example, an inorganic salt and/or its hydrate or anhydride, and/or an organic acid and/or a hydrate, anhydride, and/or salt that can be formed by the organic acid, thereby completing the present invention.

The present invention provides a method of producing a modified wooden material, the method including the steps of:
1) impregnating a wooden material with a furan derivative resinification solution such as a 5-hydroxymethylfurfural (5-HMF) resinification solution that contains: a furan derivative typified by 5-HMF; and an agent accelerating the polymerization of at least a portion of the furan derivative and/or the adhesion of the same to the wooden material, for example, an inorganic salt and/or its hydrate or anhydride, and/or an organic acid and/or a hydrate, anhydride, and/or salt that can be formed by the organic acid; and
2) allowing at least a portion of the furan derivative of the furan derivative resinification solution such as a 5-hydroxymethylfurfural (5-HMF) resinification solution that is impregnated into the wooden material to polymerize in the wooden material and/or adhere to the wooden material.

The present invention also provides a furan derivative resinification solution such as a 5-HMF resinification solution, which is preferably used in the above-described production method. Specifically, the present invention provides a furan derivative resinification solution such as a 5-HMF resinification solution, which is a solution for modifying a wooden material and contains: a furan derivative typified by 5-HMF; and an agent accelerating the polymerization of at least a portion of the furan derivative such as 5-HMF and/or the adhesion of the same to the wooden material, for example, an inorganic salt and/or its hydrate or anhydride, and/or an organic acid and/or a hydrate, anhydride, and/or salt that can be formed by the organic acid.

Further, the present invention provides a modified wooden material obtained by the above-described production method. Specifically, the present invention provides a modified wooden material which is a wooden material modified by the above-described production method and contains at least a polymerized and/or adhered furan derivative such as 5-HMF.

### EFFECTS OF THE INVENTION

According to the present invention, a wooden material can be modified.

More specifically, a furan derivative resinification solution used for modification, such as a 5-HMF resinification solution, can impart a wooden material with a superior anti-swelling efficiency (ASE) as well as at least one property selected from the group consisting of flexural strength, compressive strength, hardness, and the like, through modification of the wooden material with the solution.

### DETAILED DESCRIPTION

One embodiment of the present invention will now be described in more detail.

Those numerical values and ranges thereof that are mentioned in the present specification are intended to each include a lower or upper limit value itself, unless a particular term such as "less than" or "more than/larger than" is added thereto. In other words, for example, a numerical range of 1 to 10 can be interpreted to include "1" as a lower limit value along with "10" as an upper limit value.

### [Findings, etc. Serving as Basis of Present Disclosure]

In recent years, trees such as tropical hardwoods have been over-harvested, and their depletion is viewed as a problem.

On the other hand, the accumulated amount of domestic conifers has been increasing, and it is demanded to develop a novel use of domestic coniferous materials and explore their added value. However, in order to use a domestic coniferous material as a substitute for a tropical hardwood material, it is required to implement appropriate care for at least one of the following matters. For example, in the case of using a coniferous material as a substitute for a hardwood material, it is necessary to improve the durability (e.g., resistance to wood-decay fungi and the like) and the hardness of the coniferous material.

In addition, there are problems in the use of a highly durable and hard hardwood material as an exterior material such as a wood deck. That is, a wood material, particularly a high-density and hard wood material experiences a large dimensional change in association with a change in its moisture content, and this frequently results in warping and cracking; therefore, for the inhibition thereof, it is essential to take measures such as strongly fixing the wood material with thick bolts, and such a practice requires a great deal of time and labor. Besides, such thick bolts are often pulled out by a force of the wood material to deform. A wooden material to be used as, for example, an exterior material such as a wood deck is required to not only have a suitable durability but also exhibit a small dimensional change with fluctuations in the moisture content (i.e., a high dimensional stability). Moreover, hardness is also required for such a wooden material in terms of being unlikely to be cracked or damaged.

In the technology disclosed in Japanese Unexamined Patent Application Publication (Translation of PCT Application) No. 2005-533688 (Patent Document 1), acetone or a low-boiling-point alcohol is used as a co-solvent. In a furan derivative monomer solution to which such a co-solvent is added, it cannot be said that polymerization of a furan derivative can be sufficiently inhibited at least during the storage of the solution at room temperature. An increase in the molecular weight of the furan derivative due to polymerization during the storage, i.e., prior to being impregnated into a wooden material, makes it difficult to more uniformly impregnate a wooden material with the furan derivative. Therefore, in this technology, it may be said to be difficult to sufficiently impregnate a wooden material (e.g., a wooden material of domestic conifer such as cedar or cypress (Japanese cedar or Japanese cypress)) with the furan derivative. Moreover, even if the wooden material is impregnated with the furan derivative, satisfactory modification of the wooden material is unlikely to be achieved.

In view of the above-described background, the present applicants filed an application for an invention relating to a method of producing a modified wooden material using a furan derivative (International Patent Application PCT/JP 2021/027813).

In the invention according to this previous application, it was necessary to incorporate a stabilizer for stabilization of furfuryl alcohol, which is a furan derivative, in an aqueous solution. In addition, since low-boiling-point furan derivative monomers are evaporated and released from a wood material in the heating step of polymerizing the monomers, and this leads to a reduction in the yield, it was necessary to perform the heating step in two stages of: first heating the furan derivative monomers permeated into a wooden material at a relatively low temperature and thereby allowing the polymerization to proceed to a certain extent while inhibiting the evaporation; and subsequently heating the wooden material to a high temperature to complete the polymerization.

The present disclosure encompasses, in addition to the matters solved in the previous application filed by the present applicants, a history of attempts that were made to solve the problems in the invention of the previous application, which are the need for incorporating a stabilizer and the need for performing a two-stage heating step for the furan derivative resinification of a wooden material, by using 5-HMF that is one kind of furan derivative, and/or its derivative.

### [Production Method of Present Invention]

The present invention relates to the production of a modified wooden material. In other words, the present invention provides a method of producing a modified wooden material as a wooden material modification method.

The production method of the present invention includes the steps of:
1) impregnating a wooden material with a furan derivative resinification solution containing: a furan derivative; and an agent accelerating the polymerization of at least a portion of the furan derivative and/or the adhesion of the same to the wooden material, for example, an inorganic salt and/or its hydrate or anhydride, and/or an organic acid and/or a hydrate, anhydride, and/or salt that can be formed by the organic acid; and
2) allowing at least a portion of the furan derivative of the furan derivative resinification solution impregnated into the wooden material to polymerize in the wooden material and/or adhere to the wooden material.

The term "furan derivative resinification solution" used herein refers to a liquid that is used for a treatment of incorporating a resin into at least some parts of a wooden material mainly through polymerization of a furan derivative. In other words, the term "resinification" used herein refers to a mode in which a resin component substantially formed by polymerization of the furan derivative of the solution, or an adhered furan derivative, is incorporated into the wooden material. Hereinafter, "furan derivative resinification solution" is also simply referred to and described as "solution". Further, in the present disclosure, "adhesion" of a furan derivative "to the wooden material" refers to binding of the furan derivative to the outside (or the surface) of the wooden material or the inside of the wooden material, or permeation of a portion of the furan derivative into the wooden material.

The term "normal temperature" used herein refers to a temperature of an environment in which the temperature is not artificially changed by a person of ordinary skill in the art by means of heating, cooling, or the like (e.g., ambient temperature), and typically means a temperature 15 to 35°C, for example, 20 to 30°C, or 23 to 27°C.

The term "heating" used herein refers to a mode of artificially increasing the temperature for the purpose of accelerating the polymerization of the furan derivative in a preferred manner, and means to heat a wooden material or its surrounding environment such that a temperature condition of, for example, 40°C to 180°C, 60°C to 160°C, 70°C to 120°C, 80°C to 100°C, 70°C to 160°C, or 80°C to 150°C is obtained. It is noted here that the term "temperature" used herein refers to such a temperature of a wooden material or its surrounding environment; however, for the sake of simplicity and convenience, the term "temperature" may be deemed to mean a set temperature of an apparatus used for the production (e.g., a temperature set for a heating/warming means of a chamber).

In the present disclosure, a period of placing the wooden material under such a temperature may be continued for 2 to 240 hours, for example, 4 to 168 hours, 10 to 96 hours, 10 to 80 hours, or 10 to 48 hours. In a preferred mode, by reaction at such a temperature, not only the polymerization of the furan derivative impregnated into the wooden material and/or the adhesion of the furan derivative to the wooden material are accelerated in a more preferred manner, but also the wooden material wetted with the furan derivative resinification solution is dried. In the production method of the present invention, after the wooden material is impregnated with the furan derivative, the wooden material may be rapidly heated from the normal temperature. In another preferred mode, the wooden material impregnated with the furan derivative is placed under normal temperature without being heated to not only accelerate the polymerization of the furan derivative impregnated into the wooden material and/or the adhesion of the furan derivative to the wooden material, but also dry the wooden material wetted with the furan derivative resinification solution.

In the present disclosure, the "agent accelerating the polymerization of the furan derivative and/or the adhesion of the same to the wooden material" may act in such a manner to accelerate the polymerization of the furan derivative and/or the adhesion of the furan derivative to the wooden material at the time of, for example, resinifying the wooden material (e.g., by placing the impregnated wooden material under a temperature of 5°C or higher). For example, in the present disclosure, an "agent accelerating the polymerization of 5-HMF or its derivative and/or the adhesion of the same to the wooden material" is an agent that acts in such a manner to accelerate the polymerization of 5-HMF or its derivative and/or the adhesion of the same to the wooden material at the time of, for example, resinifying the wooden material (e.g., by placing the impregnated wooden material under a temperature of 5°C or higher). The "agent accelerating the polymerization of 5-HMF or its derivative and/or the adhesion of the same to the wooden material" may be an agent which does not accelerate the polymerization in the state of a solution by itself but accelerates the polymerization of 5-HMF or its derivative and/or the adhesion of the same to the wooden material when impregnated into the wooden material.

Further, in the present disclosure, the "agent accelerating the polymerization of the furan derivative and/or the adhesion of the same to the wooden material" may act in such a manner to accelerate the polymerization of the furan derivative and/or the adhesion of the furan derivative to the wooden material at the time of, for example, resinifying the wooden material under normal temperature without heating (e.g., by placing the impregnated wooden material under normal temperature). For example, in the present disclosure, an "agent accelerating the polymerization of 5-HMF or its derivative" may be an agent that acts in such a manner to accelerate the polymerization of 5-HMF or its derivative and/or the adhesion of the same to the wooden material at the time of, for example, resinifying the wooden material under normal temperature without heating (e.g., by placing the impregnated wooden material under normal temperature). Hereinafter, there are places where the "agent accelerating the polymerization of the furan derivative and/or the adhesion of the same to the wooden material" and the "agent accelerating the polymerization of 5-HMF and/or its derivative and/or the adhesion of the same to the wooden material" are each simply referred to and described as "accelerator".

In the present disclosure, the "wooden material" typically refers to a so-called wood material. The "wooden material" may be, for example, a wood raw material to be used for a wood product. In other words, the wooden material used in the production method of the present invention may be a wood material that is once processed or sawn from a raw wood to have a certain prescribed shape.

The furan derivative used in the production method of the present invention is not particularly limited and may be, for example, a derivative in which a hydrocarbon group (e.g., a hydrocarbon group having 1 to 40, 1 to 30, 1 to 20, 1 to 10, 1 to 8, 1 to 6, 1 to 4, 1 to 3, or 1 to 2 carbon atoms) is directly bound to a furan skeleton, namely a derivative substituted with such a hydrocarbon group. Examples of the furan derivative include furan substituted with at least one functional group selected from the group consisting of an alkyl group, a formyl group, a hydroxyl group, and a hydroxyalkyl group. The number of carbon atoms in each functional group such as an alkyl group, a formyl group, a hydroxyl group, or a hydroxyalkyl group, may be 1 to 20, for example, 1 to 10, 1 to 8, 1 to 6, 1 to 4, 1 to 3, 1 to 2, or 1. Further, the number of functional groups used for the substitution may be 1 to 4, for example, 1 to 3, 1 to 2, or 1, per molecule of the furan derivative.

The furan derivative resinification solution used in the production method of the present invention contains a "furan derivative". The furan derivative may be, for example, at least one polymerizable monomer selected from the group consisting of 5-hydroxymethylfurfural (5-HMF), derivatives thereof, and the like.

For example, 5-HMF may be a commercially available product. As merely an example, 5-HMF that is commercially available from Combi-Blocks Inc., Tokyo Chemical Industry Co., Ltd., FUJIFILM Wako Pure Chemical Corporation, Kanto Chemical Co., Inc., or the like may be used.

The furan derivative, e.g., 5-HMF and/or its derivative, can stably exist in a solution in which an aqueous solvent (particularly a solvent containing 100% by weight of water as a solvent in the solution). After the wooden material is impregnated with such a solution, the polycondensation of the furan derivative and/or the adhesion of the furan derivative to the wooden material are further accelerated by the action of the accelerator at a temperature of 5°C or higher, as a result of which the wooden material is likely to be resinified in a more preferred manner.

Among furan derivatives, for example, the use of 5-HMF is likely to further improve the anti-swelling efficiency (ASE) of the resulting modified wood material. In a preferred mode, the ASE can be 50% or higher, for example, 50 to 99%, 50 to 95%, or 50 to 90%.

Among furan derivatives, for example, the use of 5-HMF is also likely to further improve the flexural strength, the compressive strength, and/or the hardness of the resulting modified wood material. In a preferred mode, the flexural strength can be increased by 5% or more, for example, 7% or more, 10% or more, 5 to 70%, 5 to 60%, 5 to 50%, 5 to 40%, 5 to 30%, 5 to 20%, 5 to 15%, 7 to 70%, 7 to 60%, 7 to 50%, 7 to 40%, 7 to 30%, 7 to 20%, or 7 to 15%.

The furan derivative resinification solution used in the present invention may be an aqueous system. In other words, the furan derivative resinification solution used in the production method of the present invention may be a solution that contains: the above-described furan derivative; an inorganic salt and/or its hydrate or anhydride, and/or an organic acid and/or a hydrate, anhydride, and/or salt that can be formed by the organic acid, which accelerate the polymerization of the furan derivative and/or the adhesion of the same to the wooden material; and water as a solvent. Particularly, the solvent in the furan derivative resinification solution may be an aqueous medium. This means that the solvent contained in the solution is substantially composed of 90% by weight or more, 93% by weight or more, 95% by weight or more, or 97% by weight or more of water, or only water (100% by weight of water). In the present invention, a phrase "the solvent in the furan derivative resinification solution is an aqueous medium" means that the solvent contained in the solution is a solvent composed of at least 90% by weight or more of water as described above. The furan derivative resinification solution preferably contains only water as a solvent, and can be a solution that does not contain any organic solvent such as acetone. In a simple preferred mode, the furan derivative resinification solution used in the present invention may be free from acetone and the like.

More specifically, the solvent in the furan derivative resinification solution may be a simple solvent consisting of water by itself, not a solvent composed of a mixture. In this case, the solvent in the furan derivative resinification solution used in the present invention does not contain any organic solvent, and thus may be referred to as, for example, "non-organic solvent" (particularly, an aqueous medium containing 100% by weight or 100% by volume of water as a non-organic solvent).

When the solvent of the furan derivative resinification solution is an aqueous solvent consisting of water, modification of the wooden material can be performed in a more preferred manner, so that the effects of the present invention can be exerted more prominently. Without being bound to a specific theory, this is believed be related to that the furan derivative contained in the furan derivative resinification solution is more likely to reach further into the wooden material as compared to a case where the solution contains acetone or the like as a solvent. One of the factors of this is believed to be, also without being bound to a specific theory, that water used as the aqueous solvent has a higher polarity and/or a smaller molecular weight than acetone and the like, and a 100%-water aqueous solvent more easily permeates into the cell walls of a wood material than a solvent containing acetone or the like. The use of such an aqueous solvent not only can further reduce the cost of carrying out the production method of the present invention, but also is likely to be relatively advantageous in terms of safety, environmental conservation, and the like as compared to a case of using an organic solvent.

In the present invention, water used as an aqueous solvent (i.e., an aqueous medium consisting of water as a solvent) is not particularly limited in terms of its type, and any medium that is generally recognized as water can be used. As merely an example, water used as an aqueous solvent may be at least one selected from the group consisting of tap water, purified water, groundwater, river water, rain water, deionized water, distilled water, and the like.

In a certain type of mode, if necessary, a small amount of an organic solvent such as a monohydric alcohol may be incorporated into the furan derivative resinification solution used in the present invention so as to improve the solubility of the furan derivative.

The concentration of the furan derivative in the furan derivative resinification solution used in the production method of the present invention may be usually 5 to 50% by weight (not inclusive of 50% by weight), for example, 5 to 45% by weight, 10 to 45% by weight, 20 to 45% by weight, 20 to 40% by weight, or 25 to 35% by weight, based on the whole furan derivative resinification solution. For example, the concentration of 5-HMF and/or its derivative in the 5-HMF resinification solution used in the production method of the present invention may be usually 5 to 50% by weight (not inclusive of 50% by weight), for example, 5 to 45% by weight, 10 to 45% by weight, 20 to 45% by weight, 20 to 40% by weight, or 25 to 35% by weight, based on the whole resinification solution of 5-HMF and/or its derivative.

Such a concentration of the furan derivative, e.g., 5-HMF and/or its derivative, can assist a more preferred modification of the wooden material. For example, by a modification treatment of the wooden material with the solution, the wooden material is likely to be imparted with more preferred anti-swelling efficiency (ASE) as well as at least one preferred property selected from the group consisting of flexural strength, compressive strength, hardness, and the like.

The furan derivative resinification solution used in the production method of the present invention contains an "agent accelerating the polymerization of the furan derivative and/or the adhesion of the same to the wooden material". For example, a resinification solution of 5-HMF and/or its derivative contains an "agent accelerating the polymerization of 5-HMF and/or its derivative and/or the adhesion of the same to the wooden material". By incorporating such an agent into the furan derivative resinification solution, e.g., resinification solution of 5-HMF and/or its derivative, the polymerization of the furan derivative, e.g., 5-HMF and/or its derivative, in the solution, and/or the adhesion of the same to the wooden material can be accelerated in a more preferred manner when the solution is impregnated into the wooden material at 5°C or higher for a modification treatment.

The "agent accelerating the polymerization of the furan derivative and/or the adhesion of the same to the wooden material" may be an agent that accelerates the polymerization of the furan derivative and/or the adhesion of the same to the wooden material with drying at 5°C or higher, or heating. For example, the "agent accelerating the polymerization of 5-HMF and/or its derivative and/or the adhesion of the same to the wooden material" may be an agent that accelerates the polymerization of the furan derivative and/or the adhesion of the same to the wooden material with drying at 5°C or higher, or heating. The expression "accelerating the polymerization" used herein means that, because of the presence of such an agent, the rate of the polymerization reaction of the furan derivative, e.g., 5-HMF and/or its derivative, is increased as compared to a case where the agent is absent (e.g., when polymerizable monomers exist by themselves). Further, the expression "accelerating the adhesion (of the same) to the wooden material" used herein means that, because of the presence of such an agent, the rate and the amount of the adhesion of the furan derivative, e.g., 5-HMF and/or its derivative, to the wooden material is increased when the wooden material is impregnated with the furan derivative, e.g., 5-HMF and/or its derivative, as compared to a case where the agent is absent (e.g., when polymerizable monomers exist by themselves). This agent may be one which exhibits an acidity (e.g., weak acidity) in an aqueous solution (e.g., an aqueous solution at normal temperature), for example, an agent that shifts the pH of the furan derivative resinification solution, e.g., resinification solution of 5-HMF and/or its derivative, to the acidic side (i.e., further reduces the pH). Such an agent may be, for example, one which is neutral to weakly acidic at normal temperature in the form of an aqueous solution, typically exhibiting a pH of 3 to 7 (not inclusive of "7"), for example, a pH of 4 to 6.5, or 5 to 6.

In the present disclosure, "pH" refers to a hydrogen ion exponent and may be, for example, a pH value measured in accordance with "JIS Z8802 Methods for Determination of pH of Aqueous Solutions".

In the production method of the present invention, the "agent accelerating the polymerization of the furan derivative and/or the adhesion of the same to the wooden material", e.g., the "agent accelerating the polymerization of 5-HMF and/or its derivative and/or the adhesion of the same to the wooden material" is an inorganic salt and/or its hydrate or anhydride, and/or an organic acid and/or a hydrate, anhydride, and/or salt that can be formed by the organic acid. In the production method of the present invention, the inorganic salt used as the "agent accelerating the polymerization of the furan derivative and/or the adhesion of the same to the wooden material", e.g., the "agent accelerating the polymerization of 5-HMF and/or its derivative and/or the adhesion of the same to the wooden material" may be an inorganic salt formed of an anion such as a chloride ion and/or a sulfate ion, and a cation such as an ammonium ion, a magnesium ion, and/or a hydrogen ion. Such an inorganic salt can assist a more preferred modification of the wooden material.

In the production method of the present invention, the "agent accelerating the polymerization of the furan derivative and/or the adhesion of the same to the wooden material" is not particularly limited as long as, when placed under normal temperature or heated from normal temperature, it accelerates the polymerization of at least a portion of the furan derivative resinification solution such as 5-HMF resinification solution (preferably, the furan derivative, e.g., 5-HMF, of the furan derivative resinification solution, e.g., 5-HMF resinification solution, which has been impregnated into the wooden material), or the adhesion of the same to the wooden material. The "agent accelerating the polymerization of 5-HMF and/or its derivative and/or the adhesion of the same to the wooden material" may be, for example, an agent selected from the group consisting of ammonium chloride, magnesium chloride hexahydrate, maleic acid, citric acid, ammonium sulfate, ammonium hydrogen sulfate, and the like.

For example, by a modification treatment of the wooden material with the solution, the wooden material is likely to be imparted with more preferred anti-swelling efficiency (ASE) and/or at least one preferred property selected from the group consisting of flexural strength, compressive strength, and hardness, particularly anti-swelling efficiency (ASE) and the like.

In a preferred mode, the "agent accelerating the polymerization of the furan derivative and/or the adhesion of the same to the wooden material", e.g., the "agent accelerating the polymerization of 5-HMF and/or its derivative and/or the adhesion of the same to the wooden material" may be an inorganic salt. This inorganic salt may be, for example, an inorganic salt that contains, as its constituents, a combination of either a chloride ion or a sulfate ion and one or two selected from the group consisting of an ammonium ion, a magnesium ion, and a hydrogen ion.

An "inorganic salt accelerating the polymerization of the furan derivative and/or the adhesion of the same to the wooden material", e.g., an "inorganic salt accelerating the polymerization of 5-HMF and/or its derivative and/or the adhesion of the same to the wooden material" may be at least one inorganic salt selected from the group consisting of magnesium chloride, ammonium chloride, ammonium sulfate, ammonium hydrogen sulfate, magnesium sulfate, magnesium hydrogen sulfate, and the like.

Further, in the production method of the present invention, the organic salt and/or a hydrate, anhydride, or salt that can be formed by the organic acid, which can be used as the "agent accelerating the polymerization of the furan derivative and/or the adhesion of the same to the wooden material", e.g., the "agent accelerating the polymerization of 5-HMF and/or its derivative and/or the adhesion of the same to the wooden material" may be one or more organic acids selected from the group consisting of: saturated or unsaturated aliphatic hydrocarbons having 1 to 20, 1 to 6, or 1 to 4 carbon atoms and at least one carboxy group and/or sulfo group, which hydrocarbons optionally contain a halogen, an amino group, and/or a hydroxy group; and saturated or unsaturated aromatic hydrocarbons having 3 to 20, 3 to 18, or 6 to 12 carbon atoms and at least one carboxyl group and/or sulfo group, which hydrocarbons optionally contain a halogen, an amino group, and/or a hydroxyl group. The organic acid used as the "agent accelerating the polymerization of the furan derivative and/or the adhesion of the same to the wooden material", e.g., the "agent accelerating the polymerization of 5-HMF and/or its derivative and/or the adhesion of the same to the wooden material" may be any of a hydrate, an anhydride, and a salt that can be formed by the organic acid, and these may be used singly, or in combination of two or more kinds thereof.

For example, an "organic salt or its hydrate, anhydride, or salt that accelerates the polymerization of the furan derivative and/or the adhesion of the same to the wooden material", e.g., an "organic acid or its salt that accelerates the polymerization of 5-HMF and/or its derivative and/or the adhesion of the same to the wooden material", may be at least one organic acid selected from the group consisting of formic acid, acetic acid, oxalic acid, maleic acid, citric acid, glucuronic acid, methanesulfonic acid, trifluoromethanesulfonic acid, benzenesulfonic acid, p-toluenesulfonic acid, camphor sulfonic acid, fluorosulfonic acid, taurine, and the like, or a hydrate, anhydride, or salt that can be formed by any of these organic acids.

In the furan derivative resinification solution, e.g., the resinification solution of 5-HMF and/or its derivative, the concentration or amount of the "agent accelerating the polymerization of the furan derivative and/or the adhesion of the same to the wooden material", e.g., the "agent accelerating the polymerization of 5-HMF and/or its derivative and/or the adhesion of the same to the wooden material" may be, for example, 0.1 mol or less, 0.09 mol or less, 0.08 mol or less, 0.07 mol or less, 0.06 mol or less, 0.05 mol or less, 0.04 mol or less, 0.03 mol or less, or 0.02 mol or less, with respect to 1 mol of the furan derivative, e.g., 5-HMF and/or its derivative, in the solution. In this case, a lower limit value may be larger than 0 mol. For example, taking a case where an upper limit value is 0.1 mol as an example, the concentration or amount of the "agent accelerating the polymerization of the furan derivative and/or the adhesion of the same to the wooden material", e.g., the "agent accelerating the polymerization of 5-HMF and/or its derivative and/or the adhesion of the same to the wooden material", which is contained in the furan derivative resinification solution, e.g., the resinification solution of 5-HMF and/or its derivative, may be, for example, 0.001 to 0.1 mol, 0.002 to 0.1 mol, 0.003 to 0.1 mol, 0.004 to 0.1 mol, 0.005 to 0.1 mol, 0.006 to 0.1 mol, 0.007 to 0.09 mol, 0.008 to 0.08 mol, or 0.009 to 0.07 mol, with respect to 1 mol of the furan derivative, e.g., 5-HMF and/or its derivative. Such a concentration or amount of the "agent accelerating the polymerization of the furan derivative and/or the adhesion of the same to the wooden material", e.g., the "agent accelerating the polymerization of 5-HMF and/or its derivative and/or the adhesion of the same to the wooden material", can assist a more preferred modification of the wooden material. For example, by a modification treatment of the wooden material with the solution, the wooden material is likely to be imparted with more preferred anti-swelling efficiency (ASE) and/or at least one preferred property selected from the group consisting of flexural strength, compressive strength, hardness, and the like.

The wooden material subjected to the production method of the present invention is not particularly limited, and any material that corresponds to a so-called wood material can be used. The wooden material subjected to the production method of the present invention may be, for example, at least one domestic coniferous material selected from the group consisting of Japanese cedar (*Cryptomeria japonica*), Japanese cypress (*Chamaecyparis obtuse*), pine (*Pinus* L.) Japanese Larch (*Larix kaempferi*), Yezo spruce (*Picea jezoensis* var. *jesoensis*), Sakhalin fir (*Abies sachalinensis*), southern Japanese hemlock (*Tsuga sieboldii*), momi fir (*Abies firma*), and the like. The wooden material may also be, for example, at least one exotic coniferous material selected from the group consisting of southern yellow pine (*Pinus echinata*), radiata pine (*Pinus radiata*), Scots pine (*Pinus sylvestris*)*,* Chinese fir (*Cunninghamia lanceolata*), Douglas fir (*Pseudotsuga menziesii*), and the like. Moreover, as the wooden material, it is also possible to use any of the followings: solid hardwood materials such as fast-growing but soft poplar (*Populus tremula L.*) and chanaberry (*Melia azedarach*); wooden materials that have been processed to a certain extent, such as laminated wood, plywood, laminated veneer lumber, particle boards, and fiber boards, as well as laminae (sawn boards), veneers, wood chips, wood powder, and wood fibers (pulp) that constitute the wooden materials; and non-woody lignocellulose materials such as bamboo materials.

The wooden material modified by the production method of the present invention may be used in various products for indoor and/or outdoor applications. For example, the wooden material modified by the production method of the present invention may be used for furniture, flooring materials, wood decks, exterior walls, louvers, truck bodies, musical instruments, interior materials, and exterior materials.

In a preferred mode, the wooden material is a coniferous material. In this case, the effects of the present invention can be more prominent. This is because, although such wooden materials are naturally limited in use due to, for example, low dimensional stability and/or flexural strength, compressive strength, or hardness, these properties are improved by the production method of the present invention, enabling to apply the wooden materials to a wider range of applications. The coniferous material may be, for example, a cedar (Japanese cedar) material and/or a cypress (Japanese cypress) material. The Japanese cedar material and/or the Japanese cypress material may be those corresponding to domestic coniferous materials, and this preferably contributes to the development of a novel use of domestic conifers and the demand for added value.

As merely an example, the wooden material to be subjected to a modification treatment (i.e., wooden material prior to modification, or unmodified wooden material) may be adjusted to have a moisture content of 30% by weight or less, for example, 25% by weight or less, 20% by weight or less, or 15% by weight or less, based on a total weight of the wooden material (in this case, a lower limit value may be 0% by weight or more).

As described above, the furan derivative resinification solution, e.g., the resinification solution of 5-HMF and/or its derivative, which is used in the production method of the present invention preferably contains one kind of accelerator as a solute component other than the furan derivative, e.g., 5-HMF and/or its derivative. In other words, the furan derivative resinification solution, e.g., the resinification solution of 5-HMF and/or its derivative, contains an "agent accelerating the polymerization of the furan derivative and/or the adhesion of the same to the wooden material". Particularly, the furan derivative resinification solution, e.g., the resinification solution of 5-HMF and/or its derivative, which is used in the production method of the present invention is a solution containing, for example, an inorganic salt capable of acting as an "accelerator", an organic salt, and/or an oxidative polymerization agent. It may be said that such a solution can assist a more preferred modification of the wooden material and, for example, by a modification treatment of the wooden material with the solution, the wooden material is likely to be imparted with more preferred anti-swelling efficiency (ASE) as well as at least one property selected from the group consisting of flexural strength, compressive strength, and hardness.

Preferably, such an accelerator (agent accelerating the polymerization of the furan derivative and/or the adhesion of the same to the wooden material at a temperature of 5°C or higher), for example, an inorganic salt constitutes a solution along with the furan derivative, e.g., 5-HMF and/or its derivative, and a solvent (water alone, or a mixed solvent containing water and an alcohol such as ethyl alcohol). Particularly, as described above, the furan derivative resinification solution, e.g., the resinification solution of 5-HMF and/or its derivative, which contains the accelerator and a simple solvent consisting of water alone or a mixed solvent composed of water, an alcohol, and the like, can make the effects of the modification treatment of the wooden material more prominent.

In the production method of the present invention, a treatment of impregnating the wooden material with the furan derivative resinification solution, e.g., the resinification solution of 5-HMF and/or its derivative, is performed as the step 1). A means for this treatment is not particularly limited as long as it contributes to the impregnation. For example, a chamber to which the wooden material and the furan derivative resinification solution, e.g., the resinification solution of 5-HMF and/or its derivative, can be added may be used. In the step 1), for example, a method of immersing the wooden material in the furan derivative resinification solution, e.g., the resinification solution of 5-HMF and/or its derivative; a method of spraying or coating the wooden material with the furan derivative resinification solution, e.g., the resinification solution of 5-HMF and/or its derivative; and/or a method of impregnating the furan derivative resinification solution, e.g., the resinification solution of 5-HMF and/or its derivative, into the wooden material under a reduced pressure and/or pressurized condition may be employed.

When the wooden material is of a thin geometry or a small size as in the case of a veneer, wood chips, wood powder and/or wood fibers (pulp), or the like, desired impregnation can be easily achieved through a treatment such as immersion, coating, or spraying. Meanwhile, when the wooden material has a certain or larger cross-sectional dimension as in the case of a solid wood material or a lamina, desired impregnation can be easily achieved by employing a so-called vacuum pressure impregnation method, which is an impregnation treatment under a reduced pressure and/or pressurized environment.

In other words, the step 1) may be performed under a reduced pressure of less than the atmospheric pressure. This reduced pressure condition may vary depending on the shape and/or the size of the wooden material subjected to a modification treatment; however, it may be, for example, a reduced pressure condition of less than the atmospheric pressure up to 10 hPa in a temperature range of room temperature or lower. Such a reduced pressure condition can assist the impregnation of the solution into the wooden material in a more preferred manner and, for example, by a modification treatment of the wooden material with the solution, the wooden material is likely to be imparted with more preferred anti-swelling efficiency (ASE) as well as at least one preferred property selected from the group consisting of flexural strength, compressive strength, and hardness. The reduced pressure condition of the step 1) (e.g., chamber internal pressure) may be, for example, 700 to 10 hPa, 500 to 10 hPa, 100 to 10 hPa, 75 to 10 hPa, 50 to 10 hPa, 40 to hPa, or 40 to 20 hPa. The duration of subjecting the wooden material to the furan derivative resinification solution, e.g., the resinification solution of 5-HMF and/or its derivative, under the reduced pressure condition is typically 5 minutes to 16 hours, for example, 30 minutes to 16 hours, 1 hour to 16 hours, 1 hour to 8 hours, 1 hour to 4 hours, or 1 hour to 3 hours.

In the production method of the present invention, an atmospheric pressure condition or a pressurized condition may be employed as appropriate. For example, a pressure treatment may be performed after the above-described reduced-pressure treatment. In this treatment, the atmospheric pressure or a higher atmosphere pressure may be used. For example, a pressure condition (e.g., chamber internal pressure) of 0.1 to 3 MPa or 0.3 to 2 MPa may be used. The duration of subjecting the wooden material to such a pressure or pressurized condition may be typically 15 minutes to 72 hours, for example, 30 minutes to 36 hours, or 1 hour to 12 hours.

In the production method of the present invention, as the step 2), at least a portion of the furan derivative, e.g., 5-HMF and/or its derivative, which has been impregnated into the wooden material, is polymerized in the wooden material and/or adhered to the wooden material at a temperature of 5°C or higher. By placing the wooden material under normal temperature or heating the wooden material, the polymerization of the furan derivative of the furan derivative resinification solution, e.g., 5-HMF and/or its derivative of the resinification solution of 5-HMF and/or its derivative, in the wooden material, and/or the adhesion of the same to the wooden material are accelerated, as a result of which the wooden material can be modified by a generated resin component and/or due to chemical modification of the wooden material.

In the case of performing artificial heating in the step 2), a means for the heating is not particularly limited as long as it can increase the temperature of the wooden material impregnated with the solution. The heating may be performed by, for example, raising the temperature of a chamber to which the wooden material is added (e.g., the temperature of the atmosphere inside the chamber).

This heating may be performed at normal temperature to 180°C. In other words, the step 2) according to the production method of the present invention may be performed in a temperature condition of normal temperature to 180°C. Alternatively, the heating of the step 2) may be performed in a temperature condition of 40 to 180°C, 40 to 170°C, 40 to 160°C, 60 to 180°C, 60 to 170°C, 60 to 160°C, 80 to 180°C, 80 to 150°C, 80 to 140°C, or 80 to 120°C. The heating of the step 2) may also be performed at, for example, 90 to 140°C, 100 to 140°C, 110 to 140°C, or 120 to 140°C. Such a heating condition can assist a more preferred modification of the wooden material and, for example, by a modification treatment of the wooden material with the solution, the wooden material is likely to be imparted with more preferred anti-swelling efficiency (ASE) as well as at least one property selected from the group consisting of flexural strength, compressive strength, and hardness. Moreover, the temperature of the heating in the step 2) (e.g., chamber internal temperature) may be, for example, 40 to 250°C, 60 to 125°C, 60 to 120°C, or 60 to 100°C.

The duration of subjecting the wooden material to normal temperature or the heating in the step 2) may be typically 2 to 240 hours, for example, 4 to 168 hours, 4 to 96 hours, 10 to 96 hours, 10 to 80 hours, 10 to 48 hours, 4 to 48 hours, 4 to 30 hours, 10 to 30 hours, 4 to 24 hours, 4 to 10 hours, or 4 to 8 hours.

The heating of the step 2) may be performed in an air atmosphere. However, the atmosphere is not limited thereto, and heating at a relatively high temperature (e.g., heating at higher than 100°C) may be performed in an inert gas atmosphere of, for example, water vapor and/or nitrogen gas.

In the heating of the step 2), the wooden material impregnated with the solution may be dried. For example, by the heating of the step 2), the wooden material may be dried while allowing the furan derivative of the furan derivative resinification solution, e.g., 5-HMF and/or its derivative of the resinification solution of 5-HMF and/or its derivative, which has been impregnated into the wooden material, to polymerize. In other words, for example, the polymerization of the furan derivative, e.g., 5-HMF and/or its derivative, which has been impregnated into the wooden material, and/or the adhesion of the same to the wooden material are allowed to proceed by performing a heat treatment in which a chamber to which the wooden material impregnated with the furan derivative resinification solution, e.g., the resinification solution of 5-HMF and/or its derivative, is added has a temperature condition of 60 to 160°C (e.g., a process temperature condition of 80 to 160°C, 80 to 150°C, 90 to 150°C, 90 to 120°C, 90 to 110°C, 100 to 150°C, 110 to 140°C, or 120 to 140°C), for a period of 2 to 240 hours, or 2 to 260 hours (e.g., 3 to 192 hours, 3 to 168 hours, 4 to 168 hours, 4 to 96 hours, 10 to 96 hours, 10 to 80 hours, 10 to 48 hours, 4 to 48 hours, 4 to 30 hours, 10 to 30 hours, 4 to 24 hours, 4 to 10 hours, or 4 to 8 hours), and the wooden material (wetted due to impregnation with the solution) may be dried concurrently with or after the heat treatment.

The furan derivative, e.g., 5-HMF and/or its derivative, is highly stable; therefore, the furan derivative resinification solution, e.g., the resinification solution of 5-HMF and/or its derivative, which is used in the production method of the present invention, may be a solution that does not contain a stabilizer inhibiting inconvenient polymerization of the furan derivative, e.g., 5-HMF and/or its derivative in an aqueous medium (inconvenient polymerization that can be recognized as, for example, turbidity or an insolubilization and/or separation phenomenon in the solution). In other words, it is considered producing a modified wooden material with the use of such a stabilizer; however, in the case of the furan derivative resinification solution such as a 5-HMF resinification solution, a modified wooden material may be produced without using the stabilizer (in other words, in one mode, the furan derivative resinification solution according to the present invention contains no "component inhibiting the polymerization of the furan derivative at normal temperature (e.g., inorganic material that contains an inorganic salt inhibiting the polymerization of the furan derivative at normal temperature)").

Alternatively, if desired, for the purpose of further stabilizing the furan derivative, e.g., 5-HMF and/or its derivative, in an aqueous solvent during long-term storage at normal temperature or storage under an environment having a temperature of higher than normal temperature, an "inorganic material that contains an inorganic salt inhibiting the polymerization of the furan derivative at normal temperature" may be incorporated into the furan derivative resinification solution and, for example, an "inorganic material that contains an inorganic salt inhibiting the polymerization of 5-HMF and/or its derivative at normal temperature" may be incorporated into the resinification solution of 5-HMF and/or its derivative. The "inorganic material that contains an inorganic salt inhibiting the polymerization of the furan derivative at normal temperature", e.g., the "inorganic material that contains an inorganic salt inhibiting the polymerization of 5-HMF and/or its derivative at normal temperature", may be, for example, ammonia or an inorganic carbonate. In addition to or instead of this, the "inorganic material that contains an inorganic salt inhibiting the polymerization of the furan derivative at normal temperature", e.g., the "inorganic material that contains an inorganic salt inhibiting the polymerization of 5-HMF and/or its derivative at normal temperature", may be in the form of, for example, ammonia or an ammonium salt.

In a certain mode, the "inorganic material that contains an inorganic salt inhibiting the polymerization of the furan derivative at normal temperature", e.g., the "inorganic material that contains an inorganic salt inhibiting the polymerization of 5-HMF and/or its derivative at normal temperature", may be ammonia or at least one inorganic salt selected from ammonium carbonate, ammonium hydrogen carbonate, and the like. In short, the "inorganic material that contains an inorganic salt inhibiting the polymerization of the furan derivative at normal temperature", e.g., the "inorganic material that contains an inorganic salt inhibiting the polymerization of 5-HMF and/or its derivative at normal temperature", may be, for example, ammonia, ammonium carbonate, ammonium hydrogen carbonate, or a combination of two or three selected from the group consisting of ammonia, ammonium carbonate, and ammonium hydrogen carbonate. This is because such an inorganic material not only can inhibit inconvenient polymerization of the furan derivative, e.g., 5-HMF and/or its derivative, in the solution at normal temperature, and thereby allow the solution prior to being impregnated into the wooden material to maintain the quality stability in a more preferred manner, but also can serve as an inorganic material that contains an inorganic salt not inhibiting the polymerization of the furan derivative, e.g., 5-HMF and/or its derivative, during the post-impregnation heating. The expression "inhibiting the polymerization" used herein means that, because of the presence of the inorganic material containing such an inorganic salt, the rate of the polymerization reaction of the furan derivative, e.g., 5-HMF and/or its derivative, is reduced as compared to a case where the inorganic material is absent (e.g., when polymerizable monomers exist by themselves), or the polymerization reaction is stopped.

The "inorganic material that contains an inorganic salt inhibiting the polymerization of the furan derivative at normal temperature", e.g., the "inorganic material that contains an inorganic salt inhibiting the polymerization of 5-HMF and/or its derivative at normal temperature", may be an inorganic material containing an inorganic salt that exhibits basicity in an aqueous solution (e.g., an aqueous solution at normal temperature), for example, an inorganic material containing an inorganic salt that makes the furan derivative resinification solution, e.g., the resinification solution of 5-HMF and/or its derivative, basic, or shifts the pH of the solution to the basic side (i.e., further increases the pH). Incidentally, it is believed to be possible to inhibit the polymerization of the furan derivative, e.g., 5-HMF and/or its derivative, and maintain the stability of the furan derivative resinification solution, which is composed of the furan derivative, e.g., 5-HMF and/or its derivative, an inorganic salt that is neutral to weakly acidic at normal temperature and accelerates the polymerization of the furan derivative, and water, also by adding a salt such as sodium hydroxide and/or potassium hydroxide to the solution and thereby maintaining the solution to be basic; however, such a salt inconveniently inhibits the polymerization of the furan derivative, e.g., 5-HMF and/or its derivative, during the subsequent heating. In other words, desired polymerization can be inhibited during a modification treatment of the wooden material.

Inorganic materials that inhibit the polymerization of the furan derivative, e.g., 5-HMF and/or its derivative, at normal temperature but do not inconveniently inhibit the polymerization of the furan derivative, e.g., 5-HMF and/or its derivative, after the furan derivative resinification solution, e.g., the resinification solution of 5-HMF and/or its derivative, is impregnated into the wooden material are limited to a certain extent; therefore, for example, an inorganic material that is decomposed and gasified by heating and removed out of the reaction system may be used as well. Typical examples thereof include: inorganic salts, such as ammonium carbonate and ammonium hydrogen carbonate; and inorganic materials such as ammonia.

From the above-described viewpoint, it can be said that the above-described inorganic material containing an inorganic salt that is contained in the furan derivative resinification solution, e.g., the resinification solution of 5-HMF and/or its derivative, which is used in the production method of the present invention, is preferably an inorganic material containing an inorganic salt that is decomposed and gasified by heating. In other words, the "inorganic material that contains an inorganic salt inhibiting the polymerization of the furan derivative at normal temperature" contained in the furan derivative resinification solution, e.g., the resinification solution of 5-HMF and/or its derivative, may be an inorganic material containing an inorganic salt that is decomposed by heating (more specifically, decomposed and gasified by heating) after the furan derivative resinification solution, e.g., the resinification solution of 5-HMF and/or its derivative, is impregnated into the wooden material. From the same viewpoint, sodium hydroxide and potassium hydroxide are preferably excluded from the inorganic material contained in the furan derivative resinification solution, e.g., the resinification solution of 5-HMF and/or its derivative, which is used in the production method of the present invention. In other words, the "inorganic material that contains an inorganic salt inhibiting the polymerization of the furan derivative at normal temperature" contained in the furan derivative resinification solution, e.g., the resinification solution of 5-HMF and/or its derivative, is preferably an inorganic material that contains an inorganic salt other than sodium hydroxide and potassium hydroxide.

The content of the above-described inorganic salt may be adjusted as appropriate. The adjustment of the content makes it easy to control the extent of the polymerization of the furan derivative, e.g., 5-HMF and/or its derivative, and/or the adhesion of the same to the wooden material, which are brought about at a temperature of 5°C or higher after the furan derivative resinification solution, e.g., the resinification solution of 5-HMF and/or its derivative, is impregnated into the wooden material and, as a result, the sites of the generation of a furan resin, e.g., a resin of 5-HMF and/or its derivative, in the cells of the wooden material can be easily controlled. For example, an increase in the content of the "inorganic material that contains an inorganic salt inhibiting the polymerization of the furan derivative at normal temperature", e.g., the "inorganic material that contains an inorganic salt inhibiting the polymerization of 5-HMF and/or its derivative at normal temperature", in the solution is likely to control the polymerization degree of the furan derivative, e.g., 5-HMF and/or its derivative, to be low, so that a low-molecular-weight furan derivative resin is likely to be generated in the cell walls. On the other hand, for example, a reduction in the content of the "inorganic material that contains an inorganic salt inhibiting the polymerization of the furan derivative at normal temperature", e.g., the "inorganic material that contains an inorganic salt inhibiting the polymerization of 5-HMF and/or its derivative at normal temperature", is likely to control the polymerization degree of the furan derivative, e.g., 5-HMF and/or its derivative, to be high, so that a high-molecular-weight furan resin is likely to be generated and accumulated in the intracellular spaces.

As described above, the inorganic material containing an inorganic salt, which is used as a stabilizer, is capable of inhibiting the polymerization of the furan derivative, e.g., 5-HMF and/or its derivative, at normal temperature and thereby more preferably stabilizing the state of the furan derivative resinification solution, e.g., the resinification solution of 5-HMF and/or its derivative, prior to being impregnated into a wood material; therefore, a modification treatment with this solution can contribute to an improvement in the properties of the resulting modified wooden material. In addition, variation in the finished condition of the modified wooden material can be reduced, so that quality standardization of final products in which the modified wooden material is used can be easily achieved. In the present disclosure, the "inorganic material that contains an inorganic salt inhibiting the polymerization of the furan derivative at normal temperature" or the "inorganic material that contains an inorganic salt inhibiting the polymerization of 5-HMF and/or its derivative at normal temperature" may be referred to as "stabilizer".

In the present invention, in order to make it easier to impart desired properties to the wooden material, polymerization in the solution may be taken into consideration as appropriate. As merely an exemplary mode, after the furan derivative resinification solution is impregnated into the wooden material, the polymerization reaction in the wooden material may be preferably accelerated by heating while, for example, controlling the molecular weight and the reactivity of a polymer (resin) generated in the early stage of the polymerization of the furan derivative and inhibiting the polymerization of the furan derivative in the furan derivative resinification solution in a solution state.

In the furan derivative resinification solution, the concentration of the "inorganic material that contains an inorganic salt inhibiting the polymerization of the furan derivative at normal temperature" may be 0.01 mol or less, 0.005 mol or less, 0.004 mol or less, 0.003 mol or less, 0.002 mol or less, or 0.001 mol or less, with respect to 1 mol of the furan derivative contained in the solution (in this case, a lower limit value may be larger than 0 mol). For example, the concentration or amount of the "inorganic material that contains an inorganic salt inhibiting the polymerization of the furan derivative at normal temperature" in the furan derivative resinification solution may be 0.0001 to 0.004 mol, for example, 0.0003 to 0.003 mol, 0.0005 to 0.001 mol, 0.0006 to 0.001 mol, or 0.0007 to 0.0009 mol, with respect to 1 mol of the furan derivative contained in the solution. Such a concentration or amount of the "inorganic material that contains an inorganic salt inhibiting the polymerization of the furan derivative at normal temperature" can assist a more preferred modification of the wooden material. For example, by a modification treatment of the wooden material with the solution, the wooden material is likely to be imparted with more preferred dimensional stability as well as at least one preferred property selected from the group consisting of flexural strength, compressive strength, and hardness.

By incorporating such an inorganic material containing an inorganic salt into the furan derivative resinification solution, for example, the furan derivative is further stabilized in the solution at normal temperature. In other words, even when the solution is stored over a relatively long period (e.g., when the solution is placed under normal temperature for a prolonged period) or even when the solution is stored in an environment of higher than normal temperature (e.g., when the solution is exposed to a high temperature of higher than normal temperature), inconvenient polymerization of the furan derivative (inconvenient polymerization that can be recognized as, for example, turbidity or an insolubilization and/or separation phenomenon in the solution) is likely to be inhibited, so that the furan derivative resinification solution can be used in a state more suitable for a modification treatment. The "inorganic material that contains an inorganic salt inhibiting the polymerization of the furan derivative at normal temperature", through the inhibition of inconvenient polymerization of the furan derivative, allows the solution prior to being impregnated into the wooden material to have a more preferred quality stability, so that variation in the properties imparted to the wooden material by a treatment can be reduced in a more preferred manner. For example, variation in anti-swelling efficiency (ASE) as well as at least one property selected from the group consisting of flexural strength, compressive strength, and hardness can be reduced in a more preferred manner.

The "inorganic material that contains an inorganic salt inhibiting the polymerization of the furan derivative at normal temperature" may be, for example, an inorganic carbonate. In addition to or instead of this, the "inorganic material that contains an inorganic salt inhibiting the polymerization of the furan derivative at normal temperature" may be in the form of, for example, an ammonium salt. Alternatively, the "inorganic material that contains an inorganic salt inhibiting the polymerization of the furan derivative at normal temperature" may be ammonia.

In a preferred mode, the "inorganic material that contains an inorganic salt inhibiting the polymerization of the furan derivative at normal temperature" may be at least one inorganic salt selected from ammonium carbonate, ammonium hydrogen carbonate, and the like. In short, the "inorganic material that contains an inorganic salt inhibiting the polymerization of the furan derivative at normal temperature" may be, for example, ammonium carbonate, ammonium hydrogen carbonate, or a combination of ammonium carbonate and ammonium hydrogen carbonate. This is because such an inorganic material not only can inhibit inconvenient polymerization of the furan derivative in the solution at normal temperature and thereby allow the solution prior to being impregnated into the wooden material to maintain the quality stability in a more preferred manner, but also can serve as an inorganic salt that does not inhibit the polymerization of the furan derivative during the post-impregnation heating. Further, in another preferred mode, the "inorganic material that contains an inorganic salt inhibiting the polymerization of the furan derivative at normal temperature" may be ammonia. In short, the "inorganic material that contains an inorganic salt inhibiting the polymerization of the furan derivative at normal temperature" may be, for example, ammonia, ammonium carbonate, ammonium hydrogen carbonate, or a combination of two or three selected from the group consisting of ammonia, ammonium carbonate, and ammonium hydrogen carbonate. This is because such an inorganic material not only can inhibit inconvenient polymerization of the furan derivative in the solution at normal temperature and thereby allow the solution prior to being impregnated into the wooden material to maintain the quality stability in a more preferred manner, but also can serve as an inorganic material containing an inorganic salt that does not inhibit the polymerization of the furan derivative during the post-impregnation heating. The expression "inhibiting the polymerization" used herein means that, because of the presence of such an inorganic salt, the rate of the polymerization reaction is reduced as compared to a case where the inorganic salt is absent (e.g., when polymerizable monomers exist by themselves), or the polymerization reaction is stopped.

The "inorganic salt inhibiting the polymerization of the furan derivative at normal temperature" may be an inorganic salt that exhibits basicity in an aqueous solution (e.g., an aqueous solution at normal temperature), for example, an inorganic salt that makes the furan derivative resinification solution basic, or shifts the pH of the solution to the basic side (i.e., further increases the pH). Incidentally, it is believed to be possible to inhibit the polymerization of the furan derivative and maintain the stability of the furan derivative resinification solution, which is composed of the furan derivative, an inorganic salt that is neutral to weakly acidic at normal temperature and accelerates the polymerization of the furan derivative, and water, also by adding a salt such as sodium hydroxide and/or potassium hydroxide to the solution and thereby maintaining the solution to be basic; however, such a salt inconveniently inhibits the polymerization of the furan derivative during the subsequent heating. In other words, desired polymerization can be inhibited during a modification treatment of the wooden material. Salts that inhibit the polymerization of the furan derivative at normal temperature but do not inconveniently inhibit the polymerization of the furan derivative after the furan derivative resinification solution is impregnated into the wooden material are limited to a certain extent; therefore, for example, a salt that is decomposed and gasified by heating and removed out of the reaction system may be used as well. Typical examples thereof include inorganic salts such as ammonium carbonate and ammonium hydrogen carbonate.

From the above-described viewpoint, it can be said that the above-described inorganic salt contained in the furan derivative resinification solution used in the production method of the present invention is preferably an inorganic salt that is decomposed and gasified by heating. In other words, the "inorganic salt inhibiting the polymerization of the furan derivative at normal temperature" contained in the furan derivative resinification solution may be an inorganic salt that is decomposed by heating (more specifically, decomposed and gasified by heating) after the furan derivative resinification solution is impregnated into the wooden material. From the same viewpoint, sodium hydroxide and potassium hydroxide are preferably excluded from the inorganic salt contained in the furan derivative resinification solution used in the production method of the present invention. In other words, the "inorganic salt inhibiting the polymerization of the furan derivative at normal temperature" contained in the furan derivative resinification solution is preferably an inorganic salt other than sodium hydroxide and potassium hydroxide.

The content of the above-described inorganic salt may be adjusted as appropriate. The adjustment of the content makes it easy to control the extent of the polymerization of the furan derivative that is brought about by heating performed after the furan derivative resinification solution is impregnated into the wooden material and, as a result, the sites of the generation of a furan resin in the cells of the wooden material can be easily controlled. For example, an increase in the content of the "inorganic salt inhibiting the polymerization of the furan derivative at normal temperature" in the solution is likely to control the polymerization degree of the furan derivative to be low, so that a low-molecular-weight furan derivative resin is likely to be generated in the cell walls. On the other hand, for example, a reduction in the content of the "inorganic salt inhibiting the polymerization of the furan derivative at normal temperature" is likely to control the polymerization degree of the furan derivative to be high, so that a high-molecular-weight furan resin is likely to be generated and accumulated in the intracellular spaces.

As described above, the inorganic salt used as a stabilizer is capable of inhibiting the polymerization of the furan derivative at normal temperature and thereby more preferably stabilizing the state of the furan derivative resinification solution prior to being impregnated into a wood material; therefore, a modification treatment with this solution can contribute to an improvement in the properties of the resulting modified wooden material. In addition, variation in the finished condition of the modified wooden material can be reduced, so that quality standardization of final products in which the modified wooden material is used can be easily achieved.

In the present invention, in order to make it easier to impart desired properties to the wooden material, polymerization in the solution may be taken into consideration as appropriate. As merely an exemplary mode, after the furan derivative resinification solution is impregnated into the wooden material, the polymerization reaction in the wooden material may be preferably accelerated by heating while, for example, controlling the molecular weight and the reactivity of a polymer (resin) generated in the early stage of the polymerization of the furan derivative and inhibiting the polymerization of the furan derivative in the furan derivative resinification solution at normal temperature.

In the furan derivative resinification solution, the concentration of the "inorganic salt inhibiting the polymerization of the furan derivative at normal temperature" may be 0.01 mol or less, 0.005 mol or less, 0.004 mol or less, 0.003 mol or less, 0.002 mol or less, or 0.001 mol or less, with respect to 1 mol of the furan derivative contained in the solution (in this case, a lower limit value may be larger than 0 mol). For example, the concentration or amount of the "inorganic salt inhibiting the polymerization of the furan derivative at normal temperature" in the furan derivative resinification solution may be 0.0001 to 0.004 mol, for example, 0.0003 to 0.003 mol, 0.0005 to 0.001 mol, 0.0006 to 0.001 mol, or 0.0007 to 0.0009 mol, with respect to 1 mol of the furan derivative contained in the solution. Such a concentration or amount of the "inorganic salt inhibiting the polymerization of the furan derivative at normal temperature" can assist a more preferred modification of the wooden material. For example, by a modification treatment of the wooden material with the solution, the wooden material is likely to be imparted with at least one preferred property selected from the group consisting of more preferred anti-swelling efficiency (ASE), flexural strength, compressive strength, and hardness.

As desired, in the case of incorporating a stabilizer into the furan derivative resinification solution for the purpose of stabilizing the furan derivative contained in the solvent during long-term storage at normal temperature or storage under a harsh environment of low temperature or the like, prior to the heating of the step 2) that is one mode, the wooden material may be subjected to a warming treatment at a warming temperature of lower than the temperature of the heating. In other words, upon the heat treatment, the "wooden material impregnated with the solution" may be once subjected to a certain "initial set temperature" condition. By subjecting the wooden material to this "initial set temperature" (i.e., a warming treatment at the initial set temperature), the stabilizer of the furan derivative resinification solution may be at least partially decomposed in the wooden material impregnated with the solution. By subjecting the wooden material to the "initial set temperature", for example, the stabilizer in the furan derivative resinification solution can be at least partially decomposed while minimizing as much as possible the vaporization of the solution from the wooden material impregnated with the solution, and this can assist a more preferred modification of the wooden material. In other words, by a modification treatment of the wooden material with the solution, the wooden material is likely to be imparted with more preferred anti-swelling efficiency (ASE) as well as at least one property selected from the group consisting of flexural strength, compressive strength, and hardness.

As the warming treatment at the "initial set temperature", for example, by warming the wooden material impregnated with the furan derivative resinification solution in the solution, a treatment that causes the vaporization of the solution impregnated into the wooden material as little as possible may be performed. For example, as the treatment at the initial set temperature, rather than raising the temperature directly to the desired heating temperature of the step 2), a treatment of maintaining the wooden material once at a lower temperature (the below-described temperature) for a certain period may be performed (this treatment can be said to be stepwise in terms of the temperature change over time). As merely an example, in the warming treatment at the "initial set temperature", the stabilizer (i.e., the inorganic salt inhibiting the polymerization of the furan derivative at normal temperature), which may be incorporated as desired in the furan derivative resinification solution, may be at least partially or entirely decomposed by, for example, warming the wooden material impregnated with the furan derivative resinification solution in the solution such that vaporization of the solution is minimized as much as possible.

The initial set temperature may be lower than the temperature of the heating of the step 2). For example, the initial set temperature may be equal to or lower than 80% of the temperature of the heating of the step 2) (i.e., an upper limit value of the initial set temperature may be a temperature corresponding to 80% of the temperature of the heating), and a lower limit value thereof may be a temperature equivalent to 20% of the temperature of the heating of the step 2). In other words, when the initial set temperature and the temperature of the heating of the step 2) are denoted as Tᵢ and Tii, respectively, Tᵢ may be 0.2Tᵢᵢ to 0.9Tᵢᵢ (Tᵢ = 0.2Tᵢᵢ to 0.9Tᵢᵢ), for example, Tᵢ = 0.3Tᵢᵢ to 0.8Tᵢᵢ, 0.4Tᵢᵢ to 0.75Tᵢᵢ, 0.35Tᵢᵢ to 0.7Tᵢᵢ, 0.4Tᵢᵢ to 0.7Tᵢᵢ, 0.2Tᵢᵢ to 0.6Tᵢᵢ, 0.3Tᵢᵢ to 0.6Tᵢᵢ, or 0.3Tᵢᵢ to 0.5Tii.

As merely an example, the initial set temperature (e.g., the chamber temperature condition set as the initial set temperature) may be 50 to 100°C, for example, 50 to 90°C, 50 to 85°C, 55 to 85°C, or 55 to 80°C. The duration of subjecting the wooden material to a treatment at the initial set temperature may be typically 1 to 120 hours, for example, 4 to 72 hours, 6 to 60 hours, 10 to 60 hours, 20 to 60 hours, 35 to 60 hours, or 40 to 60 hours.

As an example of one mode relating to the treatment at the initial set temperature, the production method of the present invention may further include, between the step 1) and the step 2), for example, once warming the wooden material impregnated with the furan derivative resinification solution to 50 to 100°C, 50 to 90°C, 50 to 85°C, 55 to 85°C, 55 to 80°C, or 50 to 70°C.

In a preferred mode, the production method using a furan derivative resinification solution containing 5-HMF as a furan derivative, the "wooden material impregnated with the solution" is not subjected to the above-described "initial set temperature". For example, when a furan derivative resinification solution such as a 5-HMF resinification solution is used, the furan derivative resinification solution such as the 5-HMF resinification solution, which has been impregnated into the wooden material, may be subjected to desired heating (i.e., the temperature of the heating of the step 2)) without a treatment at the "initial set temperature". It can be said that, in the production using a furan derivative resinification solution such as a 5-HMF resinification solution, a desired modified wooden material may be obtained without subjecting the wooden material to the "initial set temperature". In this respect, in the production method using a furan derivative resinification solution containing 5-HMF as a furan derivative, the resulting wooden material is likely to be imparted with preferred anti-swelling efficiency (ASE) as well as at least one property selected from the group consisting of flexural strength, compressive strength, and hardness, even without being subjected to the initial set temperature during the production process.

For example, after the wooden material is impregnated with a 5-HMF resinification solution that contains 5-HMF and/or its derivative along with an inorganic salt accelerating the polymerization thereof, the heating of the step 2) may be performed without performing a treatment of maintaining the wooden material at a temperature of lower than the desired heating temperature of the step 2) (e.g., without maintaining this low-temperature condition for a period of the above-described "duration of subjecting the wooden material to a treatment at the initial set temperature").

### [Solution of Present Invention]

The solution according to the present invention is a furan derivative resinification solution that is preferably used in the above-described production method. In other words, the solution of the present invention is a solution for modifying a wooden material, which is a furan derivative resinification solution that contains a furan derivative and an agent accelerating the polymerization of at least a portion of the furan derivative and/or the adhesion of the same to the wooden material. As desired, an inorganic salt inhibiting the polymerization of the furan derivative at normal temperature may be incorporated into the furan derivative resinification solution so as to further improve the stability of the furan derivative in the solution.

As described above, this solution preferably contains one or two kinds of salts as solute components other than the furan derivative. In other words, the furan derivative resinification solution according to the present invention contains an "inorganic salt accelerating the polymerization of the furan derivative and/or the adhesion of the same to the wooden material" and, as desired, may further contain an "inorganic salt inhibiting the polymerization of the furan derivative at normal temperature". This solution is thus a more preferred wooden material modification liquid. For example, by using the solution of the present invention to perform a modification treatment of a wooden material, the wooden material can be imparted with more preferred anti-swelling efficiency (ASE) as well as at least one property selected from the group consisting of flexural strength, compressive strength, and hardness.

In a preferred mode, the concentration of the "inorganic salt accelerating the polymerization of the furan derivative and/or the adhesion of the same to the wooden material" in the solution of the present invention may be 0.001 to 0.1 mol with respect to 1 mol of the furan derivative contained in the solution. Further, the concentration of an "inorganic salt inhibiting the polymerization of 5-MHF at normal temperature", which may be incorporated as desired, may be 0.0001 to 0.004 mol with respect to 1 mol of the furan derivative contained in the solution.

In a preferred mode, the content or concentration of an "inorganic material that contains an inorganic salt inhibiting the polymerization of the furan derivative at normal temperature", which may be incorporated into the solution of the present invention as desired, may be less than or lower than the content or concentration of the "inorganic salt accelerating the polymerization of the furan derivative and/or the adhesion of the same to the wooden material". More specifically, in the furan derivative resinification solution, the molar amount of the "inorganic material that contains an inorganic salt inhibiting the polymerization of the furan derivative at normal temperature" with respect to 1 mol of the furan derivative may be less than the molar amount of the "inorganic salt accelerating the polymerization of the furan derivative and/or the adhesion of the same to the wooden material" with respect to 1 mol of the furan derivative. When the two kinds of inorganic salts have such a relative content relationship, the solution is likely to be more preferred as a modification liquid and, by using the solution to perform a modification treatment of a wooden material, the wooden material is likely to be imparted with more preferred anti-swelling efficiency (ASE) as well as at least one property selected from the group consisting of flexural strength, compressive strength, and hardness.

The furan derivative resinification solution of the present invention is preferably characterized at least by being highly stable. Therefore, even when the solution is stored under a harsh condition over a relatively long period in a mode of containing no "inorganic material that contains an inorganic salt inhibiting the polymerization of the furan derivative at normal temperature" (e.g., even when a long time is required between the preparation of the solution and the use of the solution as expected in the actual production or the like, or even when the solution is placed in an environment with severe temperature fluctuations), inconvenient polymerization of the furan derivative is likely to be inhibited, so that the furan derivative resinification solution can be used in a more preferred state for a modification treatment. In the furan derivative resinification solution of the present invention, for example, turbidity, insolubilization, and/or separation do not occur even after a lapse of preferably 7 days at normal temperature (more preferably 14 days at normal temperature, still more preferably one month at normal temperature) from its preparation (i.e., turbidity, insolubilization, and/or separation do not occur in the solution at a point immediately after a lapse of at least 7 days or 14 days; e.g., it can be judged at least visually that turbidity, insolubilization, and/or separation have not occurred in the solution).

Such a furan derivative resinification solution having a relatively high stability is particularly beneficial in view of industrial or practical treatment and production. This is because such a solution, even in the mass production of a modified wooden material, can reduce variation in the properties of the resulting modified products in a more preferred manner. For example, an inconvenient event where the resulting modified products are hardly marketable due to the occurrence of large lotto-lot variation in anti-swelling efficiency (ASE), flexural strength, compressive strength, and hardness is likely to be avoided.

Other matters relating to the furan derivative resinification solution of the present invention, such as further details and more concrete modes, are described above in the section of [Production Method of Present Invention]; therefore, description thereof is omitted here for the sake of avoiding redundancy.

### [Modified Wooden Material of Present Invention]

The modified wooden material according to the present invention is a modified wooden material obtained by the above-described production method. In other words, the modified wooden material of the present invention is a wooden material which has been modified by the above-described production method and contains at least a polymerized or adhered furan derivative.

More specifically, the modified wooden material of the present invention is a wooden material that has been modified with a "furan derivative resinification solution that contains a furan derivative and an inorganic salt accelerating the polymerization of the furan derivative and/or the adhesion of the same to the wooden material". Therefore, the modified wooden material of the present invention contains at least a furan resin formed by polymerization of the furan derivative or the furan derivative adhered to the wooden material and, in a preferred case, the modified wooden material of the present invention may contain, for example, a substance derived from the above-described inorganic salt used as a raw material. It is noted here that the resin formed by the polymerization is not necessarily limited to a resin belonging to the category of polymers, and may at least partially contain a resin belonging to the category of oligomers.

Further, when the modified wooden material of the present invention is a wooden material modified with a furan derivative resinification solution that further contains an "inorganic material that contains an inorganic salt inhibiting the polymerization of the furan derivative at normal temperature" which may be incorporated as desired, the modified wooden material of the present invention may contain the "inorganic material that contains an inorganic salt inhibiting the polymerization of the furan derivative at normal temperature", a substance derived therefrom, and the like, in addition to the above-described substance.

In a preferred mode, the modified wooden material of the present invention can exhibit at least one of the following physical properties.

### (Anti-Swelling Efficiency/ASE)

The anti-swelling efficiency (ASE) is 50% or higher, for example, 50 to 95%, 50 to 80%, 50 to 70%, 50 to 65%, or 50 to 60%.

### Anti-swelling efficiency (ASE) (%) = [(S_{c} - Sₜ)/S_{c}] × 100 Equation (3)

(wherein, St represents an end-grain surface swelling rate (%) of a modified material with moisture absorption or water absorption from a completely dry state under certain conditions, and S_{c} represents an end-grain surface swelling rate (%) of a pre-modification material (or unmodified wooden material) with moisture absorption or water absorption from a completely dry state under the same certain conditions as the modified material)

The anti-swelling efficiency ASE serves as an index of the dimensional stability. An ASE of 50% or higher is preferred for practical use of the modified wooden material, whereas an ASE of less than 50% is unsuitable/inappropriate for practical use.

It is noted here that the term "completely-dry" or "completely dry state" used herein refers to a state in which a modified material, an unmodified material, or the like placed in an incubator set at 105°C (model: DN43, manufactured by Yamato Scientific Co., Ltd.) no longer shows a change in weight. Further, the term "total dry weight" used herein refers to the weight of a material that no longer shows a change in weight.

### (Flexural Strength)

The flexural strength is a maximum stress value that is determined by a bending test performed referring to "JIS Z2101 Methods of Test for Woods", i.e., a maximum stress value obtained in a bending test performed by a "center load method" in which a load is applied to a central part between supporting points, using a tester capable of recording the load and the displacement (e.g., AUTOGRAPH manufactured by Shimadzu Corporation, EZ TEST).

Increase with respect to the flexural strength of an unmodified wood material: 5% or more, for example, 7% or more, 10% or more, 5 to 70%, 5 to 60%, 5 to 50%, 5 to 40%, 5 to 30%, 5 to 20%, 5 to 15%, 7 to 70%, 7 to 60%, 7 to 50%, 7 to 40%, 7 to 30%, 7 to 20%, or 7 to 15%

In the production method using a furan derivative resinification solution containing 5-HMF as a furan derivative, preferred anti-swelling efficiency (ASE) as well as at least one property selected from the group consisting of flexural strength, compressive strength, and hardness are likely to be imparted in the production process.

In a preferred mode, the modified wooden material according to the present invention may be a wooden material used for a flooring material, a deck (e.g., a wood deck), an exterior wall material, a louver, furniture, a truck body, a wooden fence, a guardrail, an exterior material, and/or a musical instrument.

The modified wooden material of the present invention can have the above-described preferred properties, and thus can be particularly preferably used as a wood material for not only indoor applications but also outdoor applications. Therefore, the present invention can be said to also contribute to providing a novel use and added value for conifers (e.g., domestic conifers).

Other specific matters relating to the modified wooden material of the present invention, such as additional modes, are directly or indirectly described above in the sections of [Production Method of Present Invention] and [Solution of Present Invention]; therefore, description thereof is omitted here for the sake of avoiding redundancy.

Thus far, one embodiment of the present invention has been described; however, it is nothing more than a typical example by any means. Accordingly, the present invention is not limited thereto, and a person of ordinary skill in the art will easily appreciate that various modes, modifications, and the like are conceivable.

For example, the effects described herein are merely examples, and the effects of the present invention are not necessarily limited thereto and may include additional effects.

Further, for example, the furan derivative resinification solution described in relation to the present invention contains a furan derivative and an inorganic salt accelerating the polymerization of the furan derivative; however, the presence of a component that may be unavoidably or accidentally incorporated during preparation, storage, and/or use of the solution (e.g., a component that can be recognized in a trace or infinitesimal amount by a person of ordinary skill in the art, such as a trace or infinitesimal component) is acceptable.

For the sake of confirmation, it is noted here that the present invention can encompass the following aspects.
- First aspect: A method of producing a modified wooden material, the method including the steps of:
   1) impregnating a wooden material with a 5-hydroxymethylfurfural (5-HMF) resinification solution containing: 5-HMF; and an inorganic salt and/or its hydrate or anhydride, and/or an organic acid and/or an anhydride or salt that can be formed by the organic acid, which accelerate the polymerization of at least a portion of 5-HMF and/or the adhesion of the same to the wooden material; and
   2) allowing at least a portion of 5-HMF of the 5-HMF resinification solution impregnated into the wooden material to polymerize in the wooden material and/or adhere to the wooden material.
- Second aspect:
   The method according to the first aspect, wherein a solvent in the 5-HMF resinification solution is an aqueous medium.
- Third aspect:
   The method according to the first aspect or the second aspect, wherein the inorganic salt which accelerates the polymerization of at least a portion of 5-HMF and/or the adhesion of the same to the wooden material is an inorganic salt formed of an anion such as a chloride ion and/or a sulfate ion, and a cation such as an ammonium ion, a magnesium ion, and/or a hydrogen ion.
- Fourth aspect:
   The method according to any one of the first aspect to the third aspect, wherein the concentration of the inorganic salt which accelerates the polymerization of 5-HMF and/or the adhesion of the same to the wooden material is 0.001 to 0.1 mol with respect to 1 mol of 5-HMF.
- Fifth aspect:
   The method according to the first aspect or the second aspect, wherein the organic acid and/or the anhydride or salt that can be formed by the organic acid, which accelerate the polymerization of at least a portion of 5-HMF and/or the adhesion of the same to the wooden material, are one or more organic acids selected from the group consisting of: saturated or unsaturated aliphatic hydrocarbons having 1 to 20, 1 to 6, or 1 to 4 carbon atoms and at least one carboxyl group and/or sulfo group, which are substituted with at least one functional group selected from the group consisting of a hydrogen atom, a halogen atom, an alkyl group, a formyl group, a hydroxyl group, and a hydroxyalkyl group; and saturated or unsaturated aromatic hydrocarbons having 3 to 20, 3 to 18, or 6 to 12 carbon atoms and at least one carboxy group and/or sulfo group, which are substituted with at least one functional group selected from the group consisting of a hydrogen atom, a halogen atom, an alkyl group, a formyl group, a hydroxyl group, and a hydroxyalkyl group, and/or at least one selected from the group consisting of anhydrides and acids that can be formed by the organic acids.
- Sixth aspect:
   The method according to the fifth aspect, wherein the concentration of the organic acid and/or the anhydride or salt that can be formed by the organic acid, which accelerate the polymerization of 5-HMF and/or the adhesion of the same to the wooden material, is 0.001 to 0.1 mol with respect to 1 mol of 5-HMF.
- Seventh aspect:
   The method according to any one of the first aspect to the sixth aspect, wherein the step 1) is performed under a reduced pressure of less than the atmospheric pressure.
- Eighth aspect:
   The method according to any one of the first aspect to the seventh aspect, wherein the step 2) is performed at 5 to 180°C.
- Ninth aspect:
   The method according to any one of the first aspect to the eighth aspect, wherein the wooden material is a coniferous material.
- Tenth aspect:
   The method according to any one of the first aspect to the ninth aspect, wherein the wooden material is a cedar material or a cypress material.
- Eleventh aspect:
   The method according to any one of the first aspect to the tenth aspect, wherein the concentration of 5-HMF in the 5-HMF resinification solution is 5 to 50% by weight (not inclusive of 50% by weight) based on the whole 5-HMF resinification solution.
- Twelfth aspect: A 5-HMF resinification solution for modifying a wooden material, the 5-HMF resinification solution containing:
   5-HMF; and
   an inorganic salt accelerating the polymerization of 5-HMF in the wooden material and/or the adhesion of the same to the wooden material.
- Thirteenth aspect:
   The 5-HMF resinification solution according to the twelfth aspect, wherein a solvent in the 5-HMF resinification solution is an aqueous medium.
- Fourteenth aspect:
   A modified wooden material modified by the method according to any one of claims 1 to 11, containing at least polymerized 5-HMF.
- Fifteenth aspect:
   The modified wooden material according to the fourteenth aspect, which is used for a flooring material, a deck, an exterior wall material, a louver, furniture, a truck body, a wooden fence, a guardrail, an exterior material, and/or a musical instrument.

### EXAMPLES

### [Examination of Accelerators]

In a 5-HMF resinification solution containing 30% by weight of 5-HMF, an accelerator in an amount of 0.01 mol with respect to 1 mol of 5-HMF, and water, a Japanese cedar rectangular parallelepiped sapwood (30 mm × 30 mm × 5 mm) was immersed at normal temperature under a reduced pressure of 50 hPa or less for 2 hours, after which the pressure was brought back to normal pressure and the sapwood was immersed in the resinification solution for another 24 hours.

Thereafter, the Japanese cedar rectangular parallelepiped sapwood was taken out of the 5-HMF resinification solution, and subsequently dried and reacted under the atmospheric pressure at 80°C for 3 hours and then at 105°C for 8 hours, whereby a 5-HMF resinified sample was prepared.

The anti-swelling efficiency (ASE) values that were calculated for 5-HMF resinified samples prepared using various accelerators are shown in Table 1.

**[Table 1]**

| Accelerator | Anti-swelling efficiency (ASE) |
|---|---|
| Ammonium chloride | 90.3 |
| Magnesium chloride hexahydrate | 91.0 |
| Ammonium sulfate | 90.3 |
| Ammonium hydrogen sulfate | 93.8 |
| Maleic acid | 92.0 |
| Citric acid | 89.9 |

From the results of Table 1, it was revealed that various inorganic salts and their hydrates as well as organic acids accelerate the resinification of 5-HMF in a wooden material, and impart the wooden material with markedly excellent anti-swelling efficiency. Specifically, it was demonstrated that an inorganic salt selected from the group consisting of ammonium chloride, magnesium chloride hexahydrate, ammonium sulfate, and ammonium hydrogen sulfate, as well as an organic acid selected from the group consisting of maleic acid and citric acid, impart a wooden material with anti-swelling efficiency by accelerating the polymerization of at least a portion of 5-HMF and/or the adhesion of the same to the wooden material.

### [Examination of 5-HMF Concentration]

In a 5-HMF resinification solution containing 5 to 30% by weight of 5-HMF, ammonium hydrogen sulfate in an amount of 0.01 mol with respect to 1 mol of 5-HMF, and water, a Japanese cedar or Japanese cypress rectangular parallelepiped sapwood (30 mm × 30 mm × 5 mm) was immersed at normal temperature under a reduced pressure of 50 hPa or less for 2 hours, after which the pressure was brought back to normal pressure and the sapwood was immersed in the resinification solution for another 24 hours.

Thereafter, the Japanese cedar rectangular parallelepiped sapwood was taken out of the 5-HMF resinification solution, and subsequently dried and reacted under the atmospheric pressure at 80°C for 3 hours and then at 105°C for 8 hours, whereby a 5-HMF resinified sample was prepared.

The anti-swelling efficiency (ASE) values that were calculated for 5-HMF resinified samples prepared using 5-HMF resinification solutions of various concentrations are shown in Table 2.

**[Table 2]**

| Tree species of wooden material | 5-HMF concentration (% by weight) | Anti-swelling efficiency (ASE) |
|---|---|---|
| Japanese cedar | 3 | 49.0 |
| | 10 | 71.0 |
| | 20 | 88.3 |
| | 40 | 90.2 |
| Japanese cypress | 3 | 32.2 |
| | 10 | 53.4 |
| | 20 | 77.9 |
| | 40 | 83.0 |

From the results of Table 2, it was demonstrated that 5-HMF in the resinification solution accelerates the resinification of a wooden material in a concentration range of 5 to 50% by weight, and imparts the wooden material with markedly excellent anti-swelling efficiency.

### [Examination 1 of Reaction Temperature]

In a 5-HMF resinification solution containing 20% by weight of 5-HMF, ammonium hydrogen sulfate in an amount of 0.01 mol with respect to 1 mol of 5-HMF, and water, a Japanese cedar or Japanese cypress rectangular parallelepiped sapwood (30 mm × 30 mm × 5 mm) was immersed at normal temperature under a reduced pressure of 50 hPa or less for 2 hours, after which the pressure was brought back to normal pressure and the sapwood was immersed in the resinification solution for another 24 hours.

Thereafter, the Japanese cedar rectangular parallelepiped sapwood was taken out of the 5-HMF resinification solution, and subsequently dried and reacted under the atmospheric pressure at 80°C for 3 hours and then at 105°C for 8 hours, whereby a 5-HMF resinified sample was prepared.

The anti-swelling efficiency (ASE) values that were calculated for 5-HMF resinified samples prepared at various reaction temperatures are shown in Table 3.

**[Table 3]**

| Tree species of wooden material | Reaction temperature (°C) | Anti-swelling efficiency (ASE) |
|---|---|---|
| Japanese cedar | 80 | 98.8 |
| | 100 | 88.3 |
| | 120 | 88.1 |
| | 140 | 80.3 |
| Japanese cypress | 80 | 88.3 |
| | 100 | 77.9 |
| | 120 | 77.7 |
| | 140 | 76.1 |

From the results of Table 3, it was demonstrated that the resinification of a wooden material is accelerated at least in a reaction temperature range of 80 to 140°C, and that the wooden material is thereby imparted with markedly excellent anti-swelling efficiency. Further, there was a tendency that a lower reaction temperature resulted in a higher anti-swelling efficiency (ASE) in the 5-HMF resinified samples; therefore, it was demonstrated that the resinification of a wooden material with 5-HMF can achieve its object even at a lower reaction temperature. Moreover, it was demonstrated that a wooden material is imparted with markedly excellent anti-swelling efficiency even at a high reaction temperature; however, in view of the safety, it is preferred to set the reaction temperature at 180°C or lower.

### [Examination 2 of Reaction Temperature]

Since the tendency was shown that a lower reaction temperature resulted in a higher anti-swelling efficiency (ASE), the anti-swelling efficiency (ASE) was calculated for a 5-HMF resinified sample prepared under the same conditions as in [Examination 1 of Reaction Temperature], except that the reaction temperature was set at 20°C and a Japanese cedar rectangular parallelepiped sapwood was used. The anti-swelling efficiency (ASE) calculated for this 5-HMF resinified sample prepared by reaction at 20°C is shown in Table 4.

**[Table 4]**

| Tree species of wooden material | Reaction temperature (°C) | Anti-swelling efficiency (ASE) |
|---|---|---|
| Japanese cedar | 20 | 98.8 |

From the result of Table 4, it was demonstrated that the resinification of a wooden material is accelerated even at a reaction temperature of 20°C, and that the wooden material is thereby imparted with markedly excellent anti-swelling efficiency. Further, it was demonstrated that a lower reaction temperature leads to a higher anti-swelling efficiency (ASE); therefore, it was demonstrated that the object can be achieved in a reaction temperature range where the 5-HMF resinification solution does not freeze,

for example, at a reaction temperature of 5°C or higher.

### INDUSTRIAL APPLICABILITY

The technology according to the present invention can be utilized in wooden material modification applications. For example, modification of a wooden material can make the wooden material more suitable for outdoor use. Therefore, the present invention can be preferably utilized for not only interior materials such as furniture and flooring but also exterior materials and the like such as wood decks, particularly those wooden materials that are used outdoors.

## Claims

1. A method of producing a modified wooden material, comprising the steps of:
1) impregnating a wooden material with a 5-hydroxymethylfurfural (5-HMF) and 5-HMF-resinification solution comprising an inorganic salt and/or hydrate or anhydride thereof, and/or an organic acid and/or an anhydride or salt that can be formed from the organic acid, which accelerate the polymerization of at least a portion of 5-HMF and/or the adhesion of 5-HMF to the wooden material; and
2) polymerizing at least a portion of 5-HMF of the 5-HMF resinification solution impregnated into the wooden material in the wooden material and/or adhering that to the wooden material.

2. The method according to claim 1, wherein a solvent in the 5-HMF resinification solution is an aqueous medium.

3. The method according to claim 1 or 2, wherein the inorganic salt which accelerates the polymerization of at least a portion of 5-HMF and/or the adhesion of the same to the wooden material is an inorganic salt formed of an anion which isa chloride ion and/or a sulfate ion, and a cation which is an ammonium ion, a magnesium ion, and/or a hydrogen ion.

4. The method according to any one of claims 1 to 3, wherein the concentration of the inorganic salt which accelerates the polymerization of 5-HMF and/or the adhesion of the same to the wooden material is 0.001 to 0.1 mol with respect to 1 mol of 5-HMF.

5. The method according to claim 1 or 2, wherein the organic acid and/or the anhydride or salt that can be formed by the organic acid, which accelerate the polymerization of at least a portion of 5-HMF and/or the adhesion of the same to the wooden material, are one or more organic acids selected from the group consisting of: saturated or unsaturated aliphatic hydrocarbons having 1 to 20, 1 to 6, or 1 to 4 carbon atoms and at least one carboxyl group and/or sulfo group, which are substituted with at least one functional group selected from the group consisting of a hydrogen atom, a halogen atom, an alkyl group, a formyl group, a hydroxyl group, and a hydroxyalkyl group; and saturated or unsaturated aromatic hydrocarbons having 3 to 20, 3 to 18, or 6 to 12 carbon atoms and at least one carboxy group and/or sulfo group, which are substituted with at least one functional group selected from the group consisting of a hydrogen atom, a halogen atom, an alkyl group, a formyl group, a hydroxyl group, and a hydroxyalkyl group, and/or at least one selected from the group consisting of anhydrides and acids that can be formed by the organic acids.

6. The method according to claim 5, wherein the concentration of the organic acid and/or the anhydride or salt that can be formed by the organic acid, which accelerate the polymerization of 5-HMF and/or the adhesion of the same to the wooden material, is 0.001 to 0.1 mol with respect to 1 mol of 5-HMF.

7. The method according to any one of claims 1 to 6, wherein the step 1) is performed under a reduced pressure of less than the atmospheric pressure.

8. The method according to any one of claims 1 to 7, wherein the step 2) is performed at 5 to 180°C.

9. The method according to any one of claims 1 to 8, wherein the wooden material is a coniferous material.

10. The method according to any one of claims 1 to 9, wherein the wooden material is a cedar material or a cypress material.

11. The method according to any one of claims 1 to 10, wherein the concentration of 5-HMF in the 5-HMF resinification solution is 5 to 50% by weight (not inclusive of 50% by weight) based on the whole 5-HMF resinification solution.

12. A 5-HMF resinification solution for modifying a wooden material, the 5-HMF resinification solution comprising:
5-HMF; and
an inorganic salt accelerating the polymerization of 5-HMF in the wooden material and/or the adhesion of the same to the wooden material.

13. The 5-HMF resinification solution according to claim 12, wherein a solvent in the 5-HMF resinification solution is an aqueous medium.

14. A modified wooden material modified by the method according to any one of claims 1 to 11, comprising at least polymerized 5-HMF.

15. The modified wooden material according to claim 14, which is used for a flooring material, a deck, an exterior wall material, a louver, furniture, a truck body, a wooden fence, a guardrail, an exterior material, and/or a musical instrument.
